# FASCICULE DE BREVET EUROPEEN

(11) **EP 1 981 726 B1**
(45) Date de publication et mention de la délivrance du brevet: **09.09.2009**
(21) Numéro de dépôt: 07730942.5
(22) Date de dépôt: 07.02.2007
(51) Int. Cl.: B60H 1/00

(54) **VEHICULE AUTOMOBILE ELECTRIQUE OU HYBRIDE A SYSTEME DE CONDITIONNEMENT THERMIQUE VALORISANT LES SOURCES DE BAS NIVEAU**
ELEKTRISCHES ODER HYBDRIDMOTORFAHRZEUG MIT WÄRMEREGELUNGSSYSTEM ZUR AKTUALISIERUNG VON LOW-LEVEL-QUELLEN
ELECTRICAL OR HYBRID MOTOR VEHICLE WITH THERMAL CONDITIONING SYSTEM UPGRADING LOW-LEVEL SOURCES

(30) Priorité: 09.02.2006 FR 0601184
(43) Date de publication de la demande: 22.10.2008
(73) Titulaire: Societe de Vehicules Electriques SAS, 75008 Paris 08 (FR)
(72) Inventeur: DOUARRE, Alain, F-91300 Massy (FR)
(74) Mandataire: Sayettat, Julien Christian
(86) Numéro de dépôt international: PCT/FR2007/000226
(87) Numéro de publication internationale: WO 2007/090965

(56) Documents cités:
- EP-A- 1 329 344
- EP-A1- 1 176 036
- EP-A2- 1 164 035
- DE-A1- 4 132 939
- DE-A1- 19 629 114
- FR-A1- 2 808 740
- FR-A1- 2 876 323

## Description

L'invention concerne un véhicule automobile comprenant un moteur d'entraînement des roues motrices à bas rejets thermiques, notamment un moteur électrique éventuellement combiné avec un moteur thermique. Dans ce dernier cas, le véhicule est couramment qualifié de véhicule hybride.

Un véhicule automobile comprenant un moteur thermique selon le préambule de la revendication 1 est divulgué dans le document EP 1 176 036.

Comme pour les véhicules automobiles à moteur thermique, les véhicules automobiles électriques ou hybrides doivent intégrer un système de conditionnement en température de l'air de l'habitacle. Ces systèmes de conditionnement permettent d'assurer le confort des passagers ainsi que des fonctions supplémentaires telles que le désembuage et le dégivrage des surfaces vitrées.

Les systèmes de conditionnement de l'habitacle des véhicules thermiques consomment une quantité d'énergie incompatible avec celle disponible dans les véhicules électriques, ou même hybrides, dans la mesure où pour ces derniers, le moteur thermique peut être arrêté sur des durées importantes.

En effet, dans les véhicules thermiques conventionnels, les abondantes déperditions thermiques du moteur sont à une température suffisamment élevée pour être directement exploitées pour le chauffage de l'habitacle, à travers un système peu coûteux et très compact. Les besoins énergétique relativement massifs du chauffage (jusqu'à 10 KW) sont ainsi satisfaits gratuitement.

Pour la climatisation, on dispose de systèmes également puissants et compacts, dont le coeur est un compresseur entraîné mécaniquement par le moteur, qui n'occasionnent pas d'autre inconvénient d'usage qu'une surconsommation de carburant sensible (+ 3 à 4 % en moyenne annuelle dans les régions tempérées), mais d'autant mieux acceptée au regard des bénéfices de confort et de sécurité procurés, que ces véhicules n'ont pas de contrainte d'autonomie.

Néanmoins, vue sous l'angle du développement durable, la climatisation automobile est justement critiquée, du fait de cette surconsommation et de la contribution des gaz réfrigérants mis en oeuvre au réchauffement climatique.

En effet, cette boucle réfrigérante étendue et répartie dans le compartiment moteur, contient une quantité importante de gaz réfrigérant, puissant contributeur à l'effet de serre et difficilement confiné durant la vie du véhicule.

Maîtriser la diffusion de ce gaz dans l'atmosphère est d'autant plus illusoire que toute intervention mécanique sur le groupe motopropulseur exige la purge de la boucle réfrigérante, et que le condenseur - échangeur dans lequel circule ce gaz, en face avant du véhicule -, est l'un des premiers organes à être endommagés en cas de choc frontal.

Par contraste avec les véhicules thermiques, les véhicules électriques ou hybrides disposant d'une autonomie en traction électrique pure, présentent des rejets thermiques quantitativement très insuffisants par rapport aux besoins du chauffage, qui plus est à une température trop basse pour être directement exploitables.

En climatisation, sur ces mêmes véhicules, l'énergie d'entraînement du compresseur impacte lourdement l'autonomie en ville (en mode électrique pur dans le cas hybride).

Pour ces nouvelles motorisations, qui se veulent respectueuses de l'environnement, non polluantes en ville et aussi peu dépendantes que possible de sources d'énergie non renouvelables, il est cohérent de rechercher des solutions qui ne rejettent rien à l'atmosphère, consomment le minimum d'énergie embarquée, et respectent les impératifs de coût, d'implantation confinée et de masse, qui caractérisent l'automobile.

Ajoutant qu'il est inenvisageable de restreindre en quoi que ce soit le niveau de confort auquel l'automobiliste moderne est habitué, ni de lui imposer des contraintes nouvelles qui mobilisent de son temps ou restreigne la disponibilité du véhicule, il apparaît qu'aucune solution globale convenable n'est à ce jour disponible, ou même proposée, pour répondre aux besoins de conditionnement thermique de l'habitacle des véhicules électriques ou hybrides disposant d'une autonomie en traction électrique pure.
Les publications, réalisations expérimentales, voire commerciales, issues de laboratoires institutionnels, de constructeurs ou d'équipementiers abondent depuis quelques années, illustrant l'intensité de la recherche de solutions adaptées à ces nouvelles motorisations, et plus généralement à la diminution de l'impact environnemental de la climatisation automobile.

Les solutions actuellement mises en oeuvre sur les véhicules hybrides non rechargeables sur le secteur, dont les durées de fonctionnement moteur thermique arrêté restent modestes, visent à améliorer et compléter les dispositions classiques des véhicules thermiques, pour maintenir le confort pendant les périodes d'arrêt du moteur thermique.

En chauffage, la forte inertie thermique du moteur à combustion interne permet de maintenir le confort un certain temps. Cette durée peut être utilement prolongée grâce à une résistance électrique d'appoint, typiquement sur l'air entrant dans l'habitacle. Quand le moteur se refroidit, ou quand la batterie est trop déchargée, le moteur thermique est automatiquement redémarré.

En climatisation, l'inertie thermique restituable est faible est doit être rapidement relayée. La solution couramment retenue est un double compresseur, délivrant sa pleine puissance en entraînement mécanique, et une puissance de maintien, plus modeste, en entraînement électrique. Il est naturellement plus coûteux et encombrant qu'un compresseur mécanique simple. Là aussi, le moteur thermique est automatiquement redémarré si la demande de confort n'est plus assurée (par forte chaleur et fort ensoleillement) ou quand la batterie est trop déchargée.

Pour les hybrides de type « stop & start », où le moteur thermique est seulement stoppé quand le véhicule est à l'arrêt, sur des durées généralement courtes, un complément d'inertie thermique sur la boucle de réfrigération, typiquement sous la forme d'une réserve thermique à chaleur latente peut suffire.

Les véhicules électriques ou hybrides disposant d'une autonomie électrique importante, actuellement encore peu diffusés, sont équipés de la façon suivante :
■ Pour le chauffage, une résistance électrique sur l'air ou sur l'eau, ou encore une chaudière du type chaudière additionnelle pour véhicule « grand froid »
   La première solution offre des prestations nettement en retrait de celles d'un véhicule thermique tout en amputant considérablement l'autonomie en électrique pur. La seconde, qui brûle du carburant et rejette du CO₂ et autres polluants atmosphériques, acceptable sur un hybride malgré son coût, n'est guère homogène avec la vocation d'un véhicule électrique
■ Pour la climatisation, une boucle réfrigérante classique, avec un petit compresseur électrique.
   Là aussi, le compromis se traduit souvent par des prestations plus modestes que celles d'un véhicule thermique, au prix d'une réduction sensible d'autonomie en traction électrique, notamment en ville.

L'insuffisance des solutions disponibles pour les véhicules électriques et hybrides à forte autonomie électrique amène à considérer que la solution d'avenir pérenne adaptée à ce type de véhicule peut passer par l'utilisation d'une pompe à chaleur réversible.

Dans son principe, la pompe à chaleur - qui consiste en une boucle de réfrigération telle que celle utilisée en climatisation, mais réversible en hiver - permet, en un système unique, de subvenir à la fois aux besoins de chauffage et de climatisation de l'habitacle.

Empruntant l'essentiel du besoin énergétique au milieu extérieur, la pompe à chaleur a une très forte efficacité, exprimée comme le rapport de l'énergie restituée à l'habitacle à l'énergie embarquée consommée. Aussi appelé aussi coefficient de performance ou COP, ce rapport peut couramment se situer entre 2 et 3 en climatisation, un peu plus en chauffage. De quoi assurer des prestations de chauffage et de climatisation identiques à celles d'un véhicule thermique en y consacrant une part tolérable de l'énergie de la batterie de traction.

Le principe de la pompe à chaleur à compression de vapeur est bien connu, et trouve de nombreuses applications, notamment dans l'habitat.

Il est aussi connu que l'efficacité de ce cycle diminue fortement quand l'écart de températures entre le côté rejet (échangeur sur l'air extérieur) et le côté distribution (échangeur sur l'air introduit dans l'habitacle) augmente. En climatisation automobile, cet écart est typiquement autour de 70°C (70 - 80°C côté chaud, et 0°C -10°C côté froid). En chauffage, il faudrait le porter à 110°C en descendant sous - 30°C côté froid.

L'utilisation d'une pompe à chaleur en chauffage implique eh conséquence un surdimensionnement important du compresseur, d'autant que les fluides réfrigérants usuels ne sont pas vraiment adaptés à une telle plage de températures. Dans l'habitat, l'utilisation de grandes surfaces d'échange permet de réduire très sensiblement cette amplitude, chose naturellement impossible dans le contexte confiné de l'automobile.

Constructeurs et équipementiers comptent sur les futurs cycles à CO₂ supercritique, sur lesquels ces derniers concentrent leurs efforts de développement et d'investissement, pour résoudre cette difficulté. De telles pompes à chaleur ne seront pas disponibles avant plusieurs années.

D'autres types de pompes à chaleur continuent de faire l'objet de recherches et de publications. Les performances en constant progrès de certaines peuvent les faire considérer comme possibles alternatives aux pompes à chaleur à compression de gaz: thermopompe à matériaux magnétocaloriques, thermopompe à cycle de Stirling, en particulier.

Bien que la présente invention ait pour but de proposer une architecture thermique globale qui intègre l'ensemble des besoins, ressources thermiques et autres contraintes d'une automobile électrique ou hybride à autonomie électrique, optimisée de façon à se satisfaire des performances limitées des technologies de pompe à chaleur actuellement disponibles, la présente invention est applicable avec tout type de pompe à chaleur.

Elle vise des prestations de chauffage et de climatisation de l'habitacle comparables à celles d'un véhicule thermique moderne, n'amputant l'autonomie du véhicule que de façon marginale, non gênante pour l'utilisateur, et n'imposant pas à ce dernier de quelconques contraintes spécifiques d'usage.

Bien que s'adressant en particulier aux véhicules électriques et hybrides à autonomie électriques déclinés à partir de véhicules thermiques de série, la levée de cette dernière contrainte, par exemple dans le cadre d'un véhicule nouveau dédié à cette forme de traction, comme la disponibilité future de thermopompes plus performantes de technologies nouvelles ou différentes, ne pourront qu'améliorer le potentiel de l'architecture proposée. Les principes inventifs et innovants qui la sous-tendent, hormis certaines revendications spécifiques que l'on découvrira dans la description, sont indépendants du type de pompe à chaleur, comme du détail de conception et de dimensionnement des autres organes en relation avec l'architecture thermique proposée.

De même, l'invention n'est pas limitée aux véhicules automobiles légers à autonomie électrique. Elle est pertinente pour tout type de véhicule à cabine autonome obéissant à des contraintes de type automobile, dont le conditionnement thermique de l'habitacle est assuré au moins partiellement par une pompe à chaleur devant emprunter au moins une partie de sa ressource thermique à l'air extérieur, en chauffage comme en climatisation.

Dans le cadre de l'utilisation d'une pompe à chaleur, la problématique générale du chauffage et de la climatisation des véhicules à autonomie électrique, énoncée plus haut, se décline selon les problématiques essentielles plus spécifiques suivantes.

Les technologies de pompe à chaleur disponibles ne peuvent guère répondre aux objectifs de densité de puissance et d'efficacité énergétique du conditionnement thermique de l'habitacle des véhicules à autonomie électrique qu'en rapprochant le plus possible l'amplitude des températures entre l'interface de rejet et l'interface de distribution de ladite pompe à chaleur, de l'amplitude des températures entre l'air introduit dans l'habitacle et l'air extérieur.

La difficulté est d'y parvenir dans les limites très contraintes de volume des échangeurs du groupe de chauffage / climatisation, ou HVAC, et de la façade avant du véhicule.

Si la haute efficacité énergétique potentielle de la pompe à chaleur, en climatisation et plus encore en chauffage, est attractive, on est souvent déçu des performances pratiques réelles, en application automobile. Les pertes thermiques internes du système, la variabilité des conditions opératoires et les nombreux transitoires où la pompe est loin de son rendement optimum expliquent l'écart.

Il est pourtant critique de se rapprocher du potentiel de performances de la pompe à chaleur pour relever le défi du conditionnement thermique de l'habitacle des véhicules à autonomie électrique.

Tantôt ressources thermiques potentielles pour la pompe à chaleur, tantôt en concurrence pour l'accès aux capacités d'échange avec l'air extérieur, les différents organes de la chaîne de traction ont des besoins de régulation thermique variables selon les organes et les conditions d'usage, en puissance et surtout en niveaux de température. Outre le conditionnement thermique de l'habitacle, la présente invention prend en compte, et pour certains d'entre eux, prend en charge, les besoins de conditionnement thermique des organes de la chaîne de traction.

Le cas du véhicule hybride à autonomie électrique est particulièrement critique pour l'accès aux capacités d'échange thermique avec l'air extérieur. Le moteur thermique, dont les rejets sont abondants mais à température élevée, requiert un échangeur dédié. La pompe à chaleur et le reste de la chaîne de traction ont des rejets plus modestes, néanmoins occasionnellement importants au cumul, et surtout à des températures souvent proches de celle de l'air extérieur, et requérant en conséquence des surfaces d'échange importantes.

Pour respecter les exigences d'encombrement et de coût, et éviter le foisonnement de composants thermo-hydrauliques dans des réseaux parallèles, tous ces besoins doivent être intégrés dans un système de gestion thermique unique, tant dans son architecture physique que dans sa logique opératoire.

Même si les fluides réfrigérants de dernière génération ne sont plus aussi néfastes pour l'environnement, tant que ces fluides restent des substances sensibles, il est nécessaire d'en assurer une rétention sûre pendant la vie du véhicule, et la récupération en fin de vie.

Les pompes à chaleur utilisant un gaz neutre, ou ne comportant pas de fluide actif, échapperont à cette problématique.

En chauffage, pour emprunter de la chaleur à l'air extérieur, il faut que l'échangeur soit à une température inférieure à celle de l'air.

Quand ce dernier est entre 0 et 10°C, le fluide caloporteur qui parcourt l'échangeur est typiquement à température négative. Au contact des surfaces froides, la vapeur d'eau contenue dans l'air en quantité encore relativement importante à ces températures, a tendance à se condenser et à geler, jusqu'à créer une accumulation de givre qui colmate rapidement l'échangeur.

Le phénomène de givrage, très problématique pour les applications automobiles où les surfaces d'échangeur sont contingentées, est un frein important à l'utilisation de la pompe à chaleur dans l'automobile.

Le conditionnement thermique de l'habitacle a en réalité trois composantes : le chauffage, la climatisation et le contrôle de l'hygrométrie, pour notamment éviter la formation de buée sur le pare-brise.

Sur un véhicule classique, l'assèchement de l'air introduit dans l'habitacle se fait par condensation de l'excès de vapeur d'eau sur un premier échangeur associé à la climatisation, l'air étant ensuite réchauffé sur un second échangeur de chauffage, selon les besoins.

Malgré des ressources et contraintes bien différentes, l'architecture proposée devra préserver cette prestation essentielle.

Pour bénéficier des prix et de la qualité d'organes produits en très grande série, la solution doit pouvoir s'adapter aux groupes de chauffage et de climatisation du marché, ainsi qu'aux systèmes conventionnels d'échangeurs de façade automobiles.

Plus encore, s'adressant à des véhicules électriques et hybrides à autonomie électriques déclinés à partir de véhicules thermiques de série, la solution devra respecter la contrainte de conserver une compatibilité totale avec le groupe de chauffage et de climatisation d'origine, sa logique de contrôle pour les versions à conditionnement thermique automatique, l'aménagement de l'habitacle, l'implantation de la « valise thermique » (groupe-moto ventilateur plus échangeurs sur air extérieur) et les volumes alloués aux échangeurs en façade avant du véhicule.

Pour la première fois, il est proposé une architecture thermique capable de tirer parti des performances actuellement accessibles avec les technologies disponibles de pompe à chaleur, qui atteint l'ensemble des objectifs fixés et apporte une solution complète aux problématiques ci-dessus.

Le moindre de ses mérites n'est pas d'y parvenir avec une sobriété de moyens qui tranche avec les nombreuses propositions publiées ces dernières années, dont il n'est guère surprenant qu'aucune ne se soit concrétisée en réalisation pratique. Cette économie de moyens résulte d'une communalisation poussée des organes et des circuits entre les différents besoins, associée à une exigence d'harmonisation entre les réseaux physiques et la conduite logique du système.

A cet effet, l'invention propose un véhicule automobile comprenant un moteur à bas rejets thermiques d'entrainement des roues motrices et un système de conditionnement en température de l'air de l'habitacle, ledit système de conditionnement comprenant une pompe à chaleur réversible qui conditionne en température respectivement une boucle de distribution et une boucle de rejet parcourues par un fluide caloporteur, dans lequel la boucle de distribution est connectée à un échangeur avec l'air entrant dans l'habitacle et est connectable par une électrovanne à un autre échangeur avec l'air entrant dans l'habitacle, la boucle de rejet étant connectée à un échangeur avec l'air extérieur, ladite boucle de rejet étant en outre connectée au moteur de sorte à échanger thermiquement avec ledit moteur.

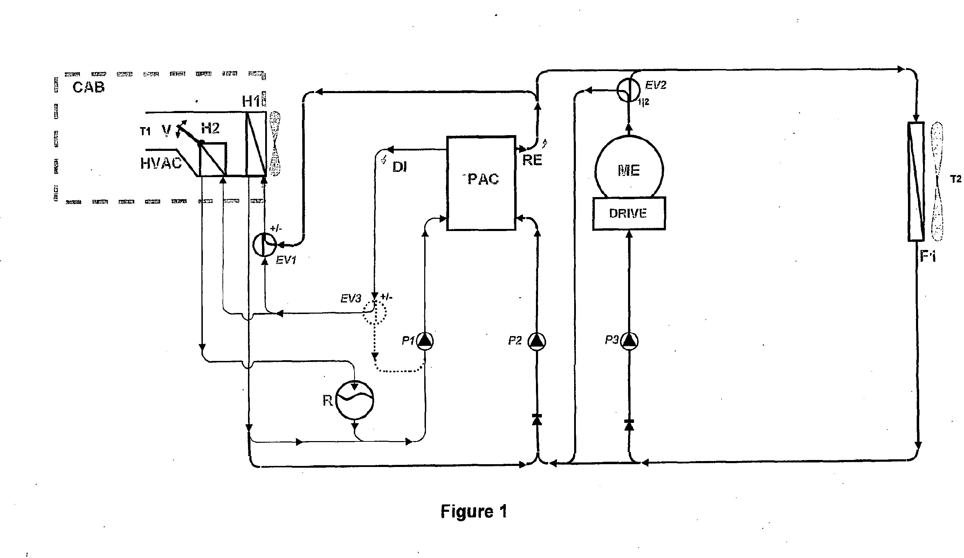

D'autres particularités et avantages de l'invention apparaîtront dans la description qui suit, faite en référence aux figures 1 à 6 jointes qui représentent respectivement un mode de réalisation d'un système de conditionnement en température de l'air de l'habitacle d'un véhicule selon l'invention.

On décrit ci-dessous le mode de réalisation représenté sur la figure 1.

Le système de conditionnement comprend une pompe à chaleur PAC réversible compacte, dont la technologie interne - cycle à compression de vapeur, machine à effet magnéto-calorique, machine Stirling, système à effet Peltier, etc. - et le dispositif d'inversion - intrinsèque à la technologie, ou par circuit auxiliaire conventionnellement interne au périmètre de ladite pompe à chaleur - sont indifférents au regard de l'invention. La pompe PAC est connectée à deux circuits parcourus par un fluide caloporteur, typiquement de l'eau glycolée.

Le circuit de distribution DI est connecté au groupe de chauffage / climatisation HVAC de l'habitacle CAB. Ce groupe est de construction conventionnelle, et son fonctionnement détaillé plus loin. Plus précisément, il est connecté en permanence à l' « aérotherme », que nous appellerons ici échangeur H2 et il est connectable, selon la position de l'électrovanne EV1, à l' échangeur H1 ( ou « évaporateur » pour reprendre la dénomination conventionnelle de cet échangeur qui fait normalement partie de la boucle de climatisation d'un véhicule classique, desservi par un fluide réfrigérant, mais qui, selon un mode préféré, est ici détourné de sa fonction d'origine, ou lui est le cas échéant substitué, et est parcouru par le fluide caloporteur).

Le circuit de rejet RE, est connecté d'une part au moteur électrique ME et à son boîtier d'entraînement électronique ou « DRIVE », en série ou en dérivation selon la position de l'électrovanne EV2, et à l'échangeur F1 de façade avant sur l'air extérieur. Un embranchement de ce circuit est en outre connectable à l'échangeur H1 par l'intermédiaire de l'électrovanne EV1.
Les différentes branches sont animées par des pompes électriques appropriées (P1 à P3, sur la figure 1).

Un réservoir d'expansion R, réserve de fluide caloporteur, mise en pression et dégazage, est commun aux deux circuits DI, RE. Réalimenté en continu par le haut par le circuit de distribution DI, comme représenté, il constitue en outre une inertie thermique qui stabilise la boucle de distribution qui présente naturellement peu d'inertie thermique, contrairement à la boucle de rejet qui intègre le moteur ME, et contrairement également au circuit de chauffage d'un véhicule conventionnel qui contient le moteur à combustion interne. Un réservoir d'assez grande capacité et isolé thermiquement sera privilégié pour cette raison. Selon une réalisation préférée, pour augmenter la performance de ce stockage tampon, on incorpore à l'intérieur du réservoir une structure creuse alvéolaire - continue ou constituée d'un empilement de volumes élémentaires creux -, autour de laquelle le fluide caloporteur peut circuler librement, et contenant un ou plusieurs matériaux à changement de phase, dont les températures de transition correspondent aux plages de températures optimales de la boucle distribution en chauffage et en réfrigération. En plus de son rôle de stabilisation du point de fonctionnement de la pompe à chaleur PAC, cette réserve thermique permet de disposer immédiatement d'air introduit dans l'habitacle en température au redémarrage du véhicule après un arrêt de quelques dizaines de minutes, ou de relayer la pompe PAC pendant quelques minutes, lors d'une éventuelle opération de dégivrage de l'échangeur F1, ou quand dans des conditions exceptionnelles (par exemple dans une côte avec une très forte température extérieure), la pompe PAC doit temporairement s'effacer au profit du refroidissement du moteur électrique ME.

En hiver et en demi-saison, la pompe à chaleur PAC réchauffe la boucle de distribution DI et refroidit la boucle de rejet RE.

Par temps froid - typiquement au-dessous de 3°C - l'électrovanne variable EV1 mélange des fluides caloporteurs issus respectivement de la boucle de distribution DI (chaude) et de la boucle de rejet RE (froide) de sorte que l'échangeur H1 préchauffe l'air introduit dans l'habitacle.

Selon le niveau d'équipement du véhicule, la position du volet de mixage V est soit asservie par le calculateur de conditionnement d'habitacle, soit liée à la commande manuelle de température à la disposition du conducteur. Dans les deux cas, l'électrovanne EV1 déplace le mélange vers le « chaud » à mesure que la température extérieure T2 décroit, rapidement dans le premier cas, plus progressivement dans le second de façon à stabiliser la réponse de la commande manuelle de chauffage.

Selon le fonctionnement classique du groupe HVAC, une partie du débit d'air préchauffé sur l'échangeur H1, fonction de la position du volet V, est réchauffée sur l'échangeur H2 puis remélangée au reste du flux qui a contourné l'échangeur H2. A puissance de chauffage maximum, on bénéficie ainsi de la capacité de deux échangeurs, ce qui permet d'abaisser considérablement la température de fluide caloporteur nécessaire pour chauffer l'habitacle par grand froid. Là où un véhicule conventionnel requiert 80°C, 50°C suffisent ici.

Par température modérée, typiquement entre 3 et 20 °C selon l'ensoleillement, la pompe à chaleur conserve le même sens de travail, mais l'électrovanne EV1 est positionnée de sorte que l'échangeur H1 soit maintenant alimenté par du liquide froid régulé par l'électrovanne EV1, toujours par mélange de fluides provenant des boucles de distribution et de rejet, à une température sensiblement inférieure à celle de l'air extérieur T2, mais supérieure à 0°C pour éviter le givrage. L'air neuf introduit dans l'habitacle peut ainsi se décharger d'une partie de son humidité en cédant de la chaleur latente à l'échangeur H1 puis se réchauffer sur l'échangeur H2 selon les besoins, avant de pénétrer dans l'habitacle. Cette chaleur latente est récupérée sur la boucle de rejet RE et valorisée comme ressource de la pompe à chaleur PAC. Disposant d'abondantes ressources thermiques tempérées sur sa boucle de rejet, la pompe à chaleur n'a pas de mal à délivrer 60°C sur sa boucle de distribution, température très suffisante pour assurer un bon chauffage dans ces conditions.

Si toutefois, la puissance de chauffage devient limite pour assurer une température convenable de l'air introduit dans l'habitacle, notamment vers les basses températures et aux vitesses élevées du pulseur (ventilateur du groupe HVAC), le calculateur intervient sur l'électrovanne EV1 pour réchauffer l'échangeur H1 selon les besoins.

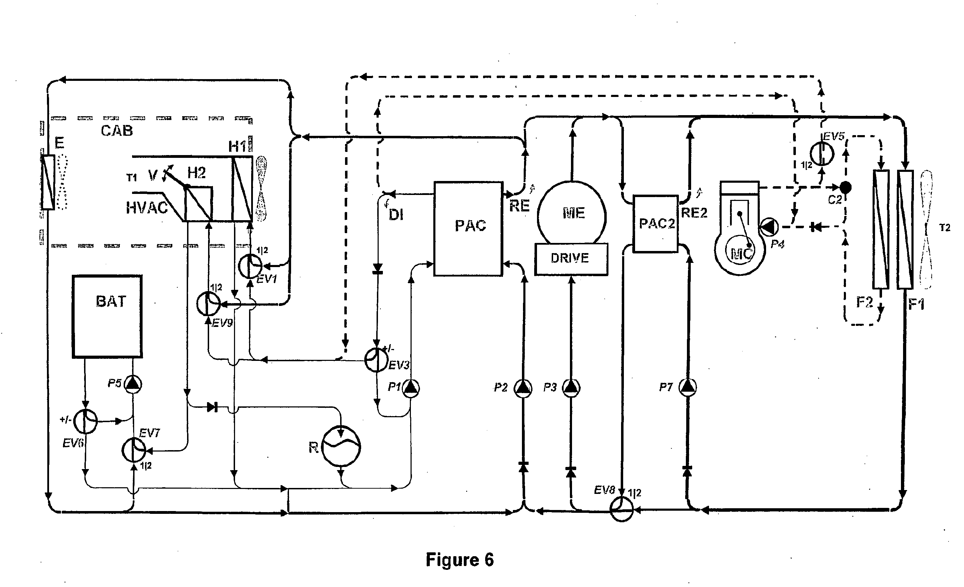

Par grande chaleur, typiquement au-delà de 20 °C selon l'ensoleillement et la température de la boucle de rejet (qui dépend de l'intensité d'utilisation du moteur de traction), ou plus simplement quand la puissance de réfrigération de l'échangeur H1 devient insuffisante, la pompe à chaleur est inversée. La boucle de distribution DI est maintenant froide, et la boucle de rejet RE chaude. L'électrovanne EV1 régule la température d'air T1 en sortie du groupe HVAC selon la consigne (générée par le calculateur de conditionnement de l'habitacle, ou la commande manuelle de température, selon le cas). La figure 1 prend en compte l'hypothèse que la logique de contrôle du volet V par le calculateur de conditionnement d'habitacle ou la commande manuelle de température, est inversée simultanément à l'inversion de la pompe à chaleur PAC. La réalisation pratique de cette inversion de commande ne pose en principe pas de difficulté, notamment si le volet bénéficie d'un actuateur motorisé. Dans ce cas la régulation sur l'électrovanne EV1 accompagne le volet en complétant son action pour obtenir l'amplitude et la progressivité de réglage de la température T1 souhaitées. Dans le cas où la commande du volet V ne pourrait être inversée, on introduirait une électrovanne d'arrêt sur l'alimentation de l'échangeur H2 - non représentée -, fermée quand la pompe chaleur est en configuration « réfrigération », afin de privilégier le débit dans l'échangeur H1. Dans ce cas, la position du volet serait indifférente, la régulation se faisant uniquement par l'électrovanne EV1. Une seconde réalisation préférée, alternative, illustrée dans le mode de réalisation représenté dans la figure 6 et explicitée plus loin, préserve les capacités de réglage de la température de l'habitacle par le volet de mixage V en toutes conditions.

Côté boucle de distribution DI, l'architecture et le mode de conduite proposés exploitent tout le potentiel d'échange des deux échangeurs en toutes conditions climatiques. Comme on l'a vu, la régulation de température d'habitacle se fait principalement par le volet de mixage, comme sur le groupe classique. Son action est complétée par l'asservissement de l'électrovanne EV1 qui règle la proportion de fluide prélevé dans la boucle de rejet RE introduite dans l'échangeur H1.

Optionnellement, le dispositif peut être complété par une électrovanne de recirculation EV3. Elle se justifie principalement pour favoriser la convergence rapide, après démarrage, de la température du fluide qui alimente la boucle de distribution DI en sortie de la pompe PAC, pour les technologies de pompe à chaleur qui auraient du mal à atteindre rapidement leur pleine performance. On profitera de sa présence comme moyen complémentaire de réguler la puissance du chauffage, cette fois par diminution du débit d'eau à travers les échangeurs H1 et H2. La combinaison des deux moyens doit permettre de trouver dans chaque cas le point de fonctionnement le plus économique.

Côté boucle de rejet RE, lorsque la pompe à chaleur PAC est en configuration « chauffage », l'électrovanne EV2 est positionnée pour que le moteur (et sa drive) ME soit desservi en amont et en série par rapport à la pompe PAC, pour valoriser au mieux ses rejets thermiques. Au contraire, lorsque la pompe PAC est inversée, par « grande chaleur » comme décrit plus haut, l'électrovanne EV2 est positionnée pour que le moteur ME et la pompe PAC, soient desservis en parallèle, de telle sorte que l'un et l'autre sont alimentés par du liquide directement issu de l'échangeur de façade avant sur l'air extérieur F1, lequel est prévu pour avoir une efficacité optimum au débit accru correspondant à cette configuration.

Analysons comment cette disposition répond aux objectifs et résout les problématiques du conditionnement thermique de l'habitacle de véhicules à autonomie électrique mettant en oeuvre une pompe à chaleur, tels que rappelés plus haut.

Nous avons montré que les prestations de confort hivernal et estival étaient assurées au même niveau qu'un véhicule conventionnel, avec les mêmes volumes d'échangeurs.

Pour une automobile moyenne, le compresseur ne devrait pas consommer au-delà de 2 kW dans les conditions extrêmes, et beaucoup moins en conditions plus représentatives, grâce notamment à la valorisation des rejets thermiques du moteur électrique et de condensation de l'excès d'eau de l'air introduit dans l'habitacle. Pour la majorité des usages, l'impact sur l'autonomie ne sera pas trop perceptible.

L'amplitude de température entre les interfaces de rejet et de distribution de la pompe à chaleur est très significativement réduite, grâce d'une part à l'association des deux échangeurs du groupe de chauffage dans les conditions extrêmes, comme on l'a vu, mais aussi côté rejet, grâce à la valorisation des rejets thermiques du moteur électrique, qui minimise l'énergie à emprunter au milieu extérieur et donc autorise une température de rejet un peu moins basse, à échangeur constant.

Le module de pompe à chaleur, compact et implantable en toute proximité du groupe de chauffage, facilite l'isolation des zones sensibles et minimise les longueurs de parcours, permettant ainsi de contenir efficacement les pertes thermiques. La présence des deux boucles secondaires glycolées tampons est bénéfique pour stabiliser les points de fonctionnement, par rapport au cas usuel où condenseur et évaporateur sont directement soumis aux aléas des conditions extérieures. En outre, les inerties thermiques du moteur électrique sur la boucle de rejet, et de la réserve d'eau glycolée sur la boucle de distribution contribuent efficacement à stabiliser les deux boucles.

Le fluide réfrigérant (cas d'une pompe à chaleur à compression de vapeur) est contenu dans le module compact de pompe à chaleur, totalement étanche. Toutes les interventions mécaniques, hormis celles sur la pompe elle-même qui se font en atelier après dépose du module, se font sans purge du réfrigérant.

L'écart réduit de température entre le fluide caloporteur de rejet et l'air extérieur, grâce aux apports thermiques du moteur électrique ME, et de l'échangeur H1 toujours connecté à la boucle de rejet dans les conditions propices au givrage, minimise considérablement les occurrences de givrage de l'échangeur F1. Si toutefois un début de colmatage se produit, le calculateur le détecte à travers une dérive des paramètres de la pompe à chaleur. Il lui suffit d'arrêter la pompe quelques minutes, sans même l'inverser, pour dégivrer rapidement l'échangeur grâce aux rejets thermiques du moteur ME et de l'échangeur H1. Grâce à l'inertie de la réserve d'eau glycolée sur la boucle de distribution, l'interruption est transparente pour les passagers. Pendant l'opération, les pompes P1 et P3 restent active, cette dernière à sa vitesse maximum.

Le désembuage est traité de façon très efficace, classique dans l'automobile, en condensant la vapeur d'eau sur l'échangeur H1 refroidi par la boucle de rejet, tandis que l'échangeur H2 assure le réchauffage de l'air, en remarquant que les conditions où on a besoin de déshumidifier l'air entrant dans l'habitacle, correspondent à des besoins de chauffage modérés, pour lesquels il n'est pas nécessaire de mobiliser les deux échangeurs du groupe de chauffage.

Hormis la pompe à chaleur et son alimentation, le système proposé fait appel à des composants automobiles standards en nombre optimisé, aussi réduit que possible. Il est compatible avec tout groupe de chauffage et climatisation d'origine, sans autre modification que l'accès à la consigne de température (au minimum, la position du volet de mixage V) et l'implantation d'un capteur de température d'air soufflé s'il n'existe pas. Il laisse inchangé l'aménagement de l'habitacle, ne remet pas en cause les échangeurs du groupe HVAC et conserve l'implantation et les volumes d'échangeurs de façade avant.

La logique de conduite du système cohabite avec l'éventuel calculateur de conditionnement thermique de l'habitacle, sans modification ni reparamétrage de ce dernier, hormis la neutralisation - ou la simulation selon le cas -, d'entrées d'informations provenant d'organes supprimés comme le compresseur de climatisation. Le contrôle de température du premier échangeur sur l'air entrant dans l'habitacle par l'électrovanne de mélange avec la boucle de rejet, complète l'action du volet de mixage en réagissant aux variations de consigne - manuelles ou données par le calculateur de conditionnement d'habitacle du groupe HVAC -, par exemple lues à travers les déplacements du volet, donc potentiellement sans interférer avec ledit éventuel calculateur de conditionnement d'habitacle qui reste maître, de sorte à préserver la continuité de l'amplitude et la progressivité du réglage de la température de l'air introduit dans l'habitacle quelle que soit l'orientation de la pompe à chaleur réversible d'une part, et d'autre part à réguler l'hygrométrie du même air introduit dans l'habitacle en fonction de la température de l'air extérieur.

Cette logique de conduite est facilement implantable dans le calculateur de bord ou un calculateur dédié. Sa programmation est simple, déterministe, largement prédéfinie : un nombre minimum de paramètres est à régler en fonction de l'application, la plupart calculables. Ainsi, la solution est implantable sans remise en cause de l'optimisation et de la mise au point fines du groupe HVAC par rapport aux spécificités du modèle pour lequel il a été développé.

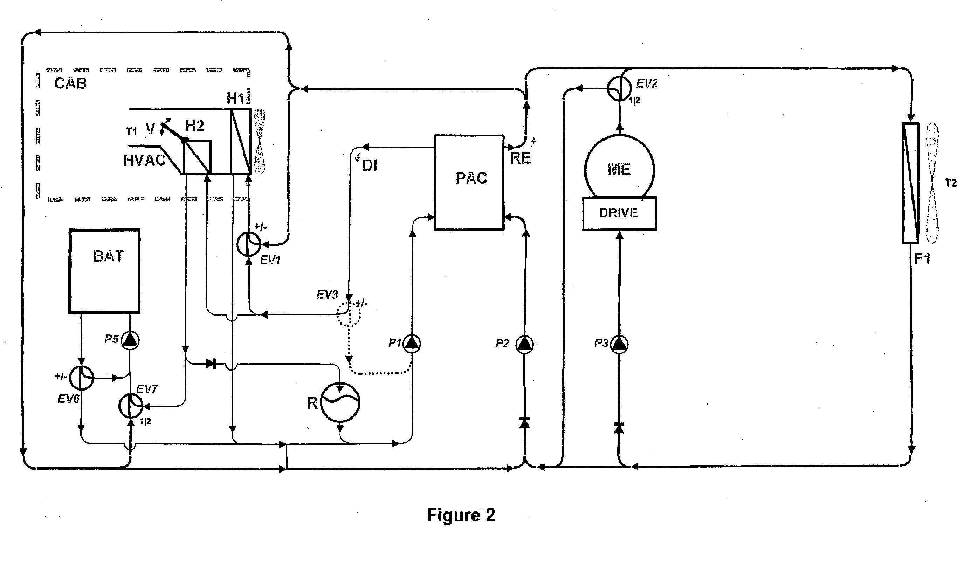

On décrit ci-dessous le mode de réalisation de la figure 2 qui ajoute au mode précédent le conditionnement thermique de la batterie de traction BAT.

Les batteries de traction ont typiquement une plage de température interne correspondant à un compromis optimum entre performance (puissance et énergie restituées) et longévité.

Par exemple, pour certaines chimies à base de lithium, on peut souhaiter opérer la batterie de préférence entre 20°C et 40°C. Le maintien de ces conditions été comme hiver garantira une grande stabilité des performances et de l'autonomie du véhicule. Comme les variations de la température extérieure dépassent de beaucoup l'amplitude de température de fonctionnement, la batterie sera de préférence isolée thermiquement du milieu extérieur.

La présente invention prévoit la prise en charge des besoins de conditionnement thermique de batteries dont la plage de température de fonctionnement est couverte par l'amplitude de température de la pompe à chaleur.

La batterie dégrade un pourcentage de son énergie en chaleur, faible en moyenne (quelques centaines de Watt), mais très variable et potentiellement beaucoup plus intense sur de courtes périodes selon les conditions d'usage.

Disposant d'une importante inertie thermique vis-à-vis des modestes puissances thermiques internes, la batterie peut être principalement gérée thermiquement par préconditionnement thermique pendant sa recharge sur le secteur, en utilisant les ressources du système de gestion thermique interne du véhicule, de sorte que ce dernier ne soit qu'exceptionnellement sollicité pour la batterie en roulage.

Néanmoins, l'homogénéité des températures à l'intérieur de la batterie est de première importance. Même sans nécessité d'échange de calories avec la batterie en roulage, le système de gestion thermique doit être apte à maintenir l'homogénéité thermique interne de la batterie.

Surtout, l'objectif prioritaire d'un système de gestion thermique de la batterie est de lui éviter d'atteindre des températures internes à partir desquelles elle présenterait des risques d'emballement exothermique. Si pour une quelconque raison, en principe dysfonctionnelle, un seuil d'alerte est atteint, le système de gestion thermique du véhicule doit être à même de mobiliser prioritairement ses ressources pour refroidir puissamment la batterie.

Dans la réalisation présentée, la batterie BAT dispose d'une boucle de fluide caloporteur autonome animée par la pompe P5, connectée à la boucle de distribution DI et à la boucle de rejet RE par l'électrovanne de commutation EV7, tandis que l'électrovanne de recirculation EV6 règle le débit de renouvellement du fluide de la boucle. Une réalisation alternative, non représentée, ferait de l'électrovanne EV6 une vanne de commutation et de l'électrovanne EV7 une vanne de mélange progressive.

La disposition proposée permet de maintenir une circulation permanente du fluide caloporteur dans la batterie pour homogénéiser ses températures internes. En cas de besoin de réchauffement ou de refroidissement, l'électrovanne EV6 laisse retourner un certain débit de fluide vers les circuits du véhicule, laissant la place à du fluide neuf, entrant par l'électrovanne EV7, chaud ou froid selon le besoin et prélevé dans le circuit de distribution DI ou de rejet RE en fonction de la configuration de la pompe à chaleur (chauffage ou réfrigération) du moment. Le processus est géré par le calculateur du véhicule en fonction des températures des boucles.

On remarquera que cette disposition permet, aussi bien en roulage si nécessaire qu'à la recharge, de conditionner la batterie en chaud ou en froid, indépendamment de l'orientation de la pompe à chaleur PAC et des besoins de conditionnement ou de préconditionnement de l'habitacle ou, comme on verra plus loin, du stockage thermique.

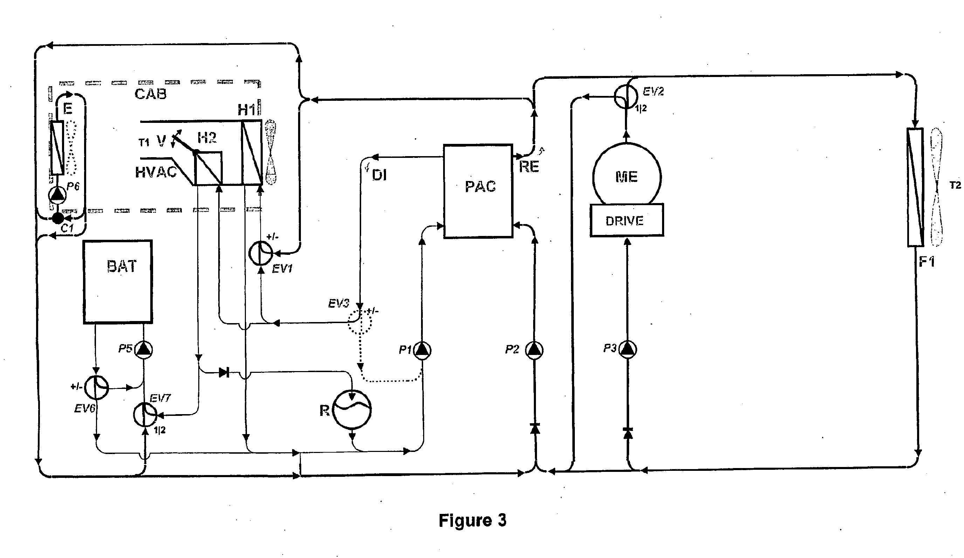

On décrit ci-dessous le mode de réalisation de la figure 3 qui ajoute au mode précédent la récupération thermique sur l'air extrait de l'habitacle.

En automobile, la majeure partie de l'énergie fournie pour le conditionnement thermique de l'habitacle est directement rejetée au milieu extérieur avec l'air extrait. Du point de vue de la pompe à chaleur, cette énergie est à un niveau thermique plus favorable que celui de l'air extérieur, et l'air extrait représente une ressource potentielle de très bonne qualité. Contrairement aux organes comme le moteur électrique qui sont une ressource pour le chauffage, mais sont en concurrence pour le refroidissement, un échangeur de récupération sur l'air extrait est en permanence une ressource appréciable, été comme hiver.

On estime à 1 KW la puissance qui pourrait être ainsi récupérée. Dans les conditions extrêmes, ce supplément dé ressource sur la boucle de rejet se retrouve en pratique reporté sur la boucle de distribution, et dope la performance de la pompe à chaleur dans les conditions où elle tend à fléchir. En conditions habituelles, c'est peut-être 200 W de consommation électrique moyenne que l'on peut éviter, sur l'année.

Au bilan, et en ordre de grandeur, la récupération de l'énergie de l'air extrait permettra donc de diminuer de 10% le dimensionnement et la consommation moyenne de la pompe à chaleur, tout en gagnant encore 5% sur la performance du système.

En été, le différentiel de température moyen entre le fluide et l'air extrait peut-être de 25°C. En hiver, comme le fluide ne peut pas être au-dessous de 0°C, sous peine de givrage rapide de l'échangeur, le différentiel de température tombe autour de 15°C, mais la récupération de la chaleur latente de condensation de la vapeur d'eau, contribue ici largement à la puissance totale récupérable.

Dans la réalisation représentée, l'échangeur sur l'air extrait de l'habitacle E est disposé à l'arrière du véhicule, au droit de l'extracteur d'air. Il est alimenté à partir de la boucle de rejet, avec du fluide prélevé en sortie de la pompe PAC. Il est intégré à une boucle de régulation secondaire animée par un circulateur P6, contrôlée par une vanne thermostatique C1, qui maintient la boucle à une température supérieure ou égale à 0°C, évitant tout risque de givrage. Le module de récupération comprend également un dispositif de recueil et d'évacuation de l'eau de condensation. Optionnellement, il peut être équipé d'un mini pulseur, qui permet d'exploiter un échangeur plus performant. Dans la réalisation pratique, il est important de ménager une capacité d'évacuation des surpressions de claquage des portières, par un échangeur disposant d'une section de passage sur l'air suffisante ou de préférence par un dispositif d'évacuation parallèle, à volet, donc normalement obturé en dehors de ces circonstances.

La même dérivation de la boucle de rejet RE dessert la batterie, également située à l'arrière du véhicule, de sorte que la récupération sur l'air extrait n'introduit que peu de longueur de conduites supplémentaire.

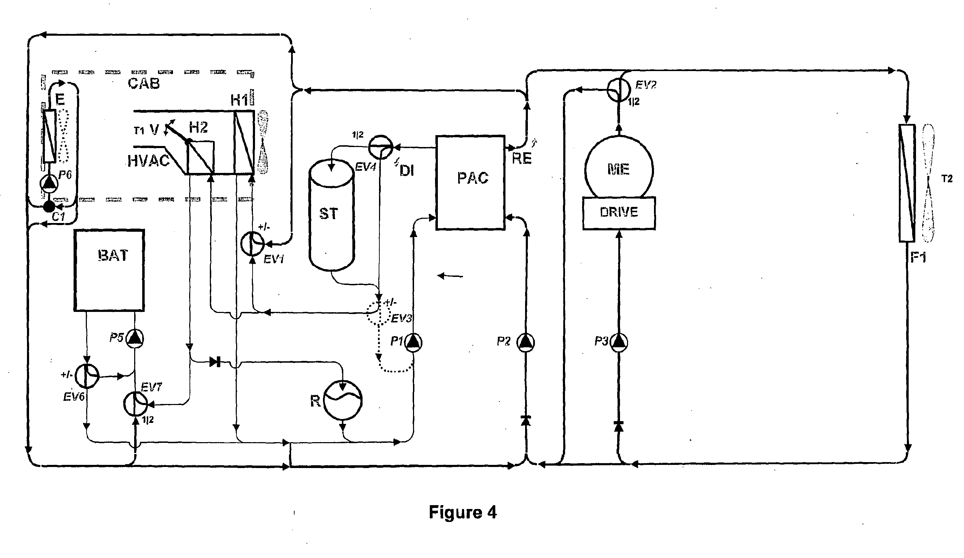

On décrit ci-dessous le mode de réalisation de la figure 4 qui ajoute au mode précédent le stockage thermique.

En plus de l'inertie thermique tampon constitué par le réservoir R aménagé à cet effet, on peut souhaiter disposer d'une réserve thermique plus importante, que l'on puisse préconditionner pendant la recharge à la prise, en chaud ou en froid selon la saison. Le stockage thermique ST peut restituer de l'énergie « gratuite », notamment en appoint de puissance pendant des phases critiques comme le redémarrage après un stationnement prolongé (au froid ou au soleil).

En particulier, la boucle de distribution DI est connectée à ladite réserve de sorte à échanger thermiquement avec elle, notamment en intégrant la réserve inertielle d'énergie thermique ST à la boucle de distribution DI en amont des échangeurs H1, H2 avec l'air entrant dans l'habitacle CAB.

La réserve inertielle d'énergie thermique ST peut comprendre une quantité d'un ou plusieurs matériaux à changement de phase dans une plage de température déterminée

En outre, la boucle de distribution DI comprend une électrovanne EV4 qui permet d'isoler la réserve inertielle ST de ladite boucle de distribution. En particulier, l'électrovanne EV4 permet de l'isoler du circuit de distribution, dans le cas où elle serait vide ou conditionnée défavorablement par rapport aux besoins du moment, de façon à ne pas compromettre la réactivité du système de conditionnement.

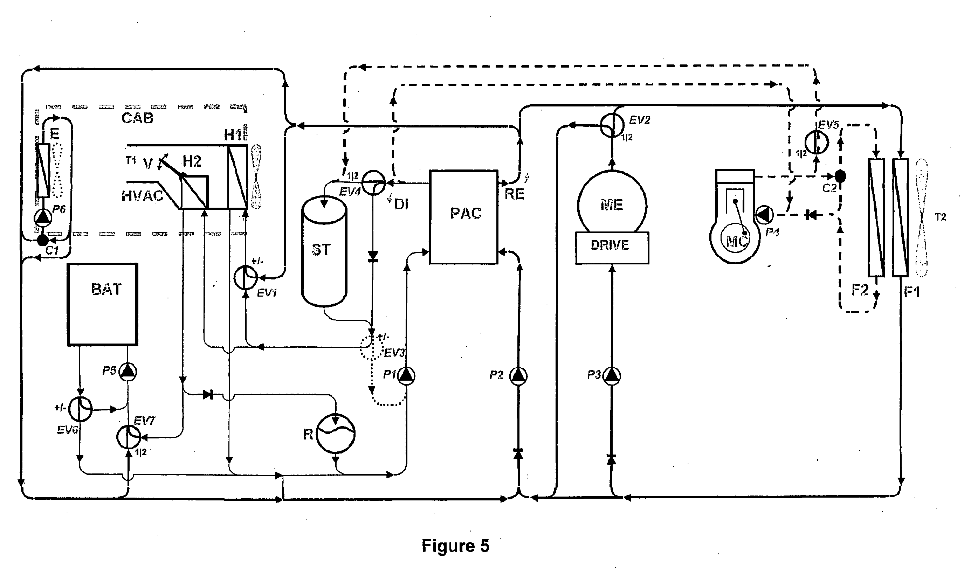

On décrit ci-dessous le mode de réalisation de la figure 5 qui ajoute au mode précédent un moteur thermique à combustion interne MC.

Le moteur à combustion interne MC dispose de son propre circuit de refroidissement, comprenant classiquement un échangeur F2 une pompe intégrée P4 et un calorstat C2 qui régule la température de l'eau glycolée en recirculant tout ou partie de son débit dans le moteur en by-passant l'échangeur F2.

Les sorties d'eau classiquement prévues pour le chauffage de l'habitacle sont ici raccordée sur la boucle de distribution DI sous le contrôle de l'électrovanne d'arrêt EV5.

Quand le moteur à combustion fonctionne et qu'il y a des besoins de chauffage, il prend ainsi le relais de la pompe PAC qui peut être arrêtée. Le stockage thermique ST est alors reconstitué s'il y a lieu.

Du fait de la communication permanente de la branche de retour de cette liaison avec les circuits de la pompe à chaleur, la boucle de refroidissement du moteur à combustion interne partage le même réservoir R de réserve de fluide caloporteur, de mise en pression et de dégazage, décrite plus haut. Ce réservoir est en réalité unique dans le véhicule et alimente la totalité du réseau de fluide caloporteur.

On décrit ci-dessous le mode de réalisation de la figure 6 qui ajoute au mode précédent l'utilisation d'une pompe à chaleur relais pour les très basses températures. Dans cette réalisation, le véhicule automobile comprend en outre une deuxième pompe à chaleur PAC2 dont la boucle de rejet RE2 dessert l'échangeur F1, la boucle de distribution de ladite deuxième pompe à chaleur étant connectable à la boucle de rejet RE par l'intermédiaire d'une électrovanne EV8. Ainsi, lorsque cette connexion est établie, les deux pompes à chaleur déterminent entre elles une boucle intermédiaire isolée de l'échangeur F1 et desservant le moteur ME, et les éventuels autres organes suivants : boîtier électronique de commande du moteur DRIVE, échangeurs sur l'air introduit dans l'habitacle H1, H2, batterie BAT, échangeur sur l'air extrait de l'habitacle E. Et, lorsque cette connexion n'est pas établie, l'échangeur F1 se substitue, vis à vis de la pompe à chaleur PAC, à ladite pompe à chaleur PAC2 dans la boucle de rejet RE.

Malgré l'impact favorable de tous les dispositifs précédents pour réduire l'amplitude de température de la pompe PAC, il reste que par très grand froid - disons au-dessous de - 18°C - les technologies de pompe à chaleur actuelles peinent à extraire les calories de l'air glacial, une bonne partie des rejets thermiques des organes, dissipés directement par les parois, étant en outre perdus, de sorte que la puissance restituée par la pompe PAC chute inexorablement alors même que les besoins augmentent. Dans ces conditions, l'écart se creuse avec les véhicules conventionnels qui continuent à faire figure honorable.

Sous nos latitudes, un palliatif recommandable pour ces situations exceptionnelles peut être l'adjonction d'une résistance électrique sur l'air introduit dans l'habitacle, dispositif standard sur la plupart des groupes de chauffage pour accélérer la mise en température de l'habitacle pendant que le moteur chauffe, qui pourra avantageusement être réutilisé ici comme ressource d'appoint.

Mais il est proposé ici de traiter le problème au fond, soit pour les véhicules destinés au pays plus nordiques, soit comme on le verra, parce que cette solution présente le potentiel d'aller encore plus loin dans l'optimisation de l'ensemble du dispositif.

Remarquons d'abord qu'une pompe à chaleur restituant 6 KW et optimisée pour fonctionner entre 0 et 60°C aurait une efficacité énergétique (COP) très supérieure et un encombrement réduit par rapport à une pompe à chaleur tentant de couvrir la plage [- 30°C, + 60°C]. Le choix [0°C, 60°C] symétrise les besoins de températures des deux sources entre l'été et l'hiver, de sorte que la pompe à chaleur réversible tournerait au même point de fonctionnement optimum été comme hiver.

Eté comme hiver, on disposerait d'une ressource autour de 0°C directement utilisable pour assécher l'air entrant dans l'habitacle sur l'échangeur H1 ou récupérer les calories de l'air extrait de l'habitacle sur l'échangeur E.

Remarquons d'autre part qu'une pompe à chaleur relais de 3 KW travaillant entre [- 40°C, 0°C], pourrait utiliser un fluide frigorigène dédié, bénéficier d'un COP avantageux sur cette plage réduite et, qui plus est non réversible, être particulièrement compacte. En outre, elle ne serait exploitée que pendant une période réduite de l'année.

La figure 6 présente comment évolue l'architecture thermique précédente en divisant la pompe à chaleur PAC, à large domaine et flexibilité de d'opération, en deux pompes à chaleur spécialisées en cascade.

Sur la boucle de rejet RE, en configuration réfrigération, la circulation est exactement la même que précédemment : la boucle dessert en parallèle le moteur électrique ME puis l'échangeur F1, la pompe à chaleur secondaire PAC2 étant déconnectée du circuit par l'électrovanne EV8 et l'arrêt de la pompe P7.

En condition chauffage, par contre, la boucle de rejet RE reboucle sur l'interface de distribution de la pompe à chaleur PAC2, par l'électrovanne EV8 alors que le moteur ME reste en parallèle entre les deux pompes à chaleur. Cette boucle intermédiaire se stabilise autour de 0°C. Côté rejet de la pompe PAC2, la boucle RE2 est maintenant animée par la pompe P7 et dessert l'échangeur F1.

On voit qu'on a pu faire l'économie de la commutation parallèle / série du moteur électrique ME, et de la boucle de régulation de température de l'échangeur sur l'air extrait E.

Côté boucle de distribution DI, la solution est ici présentée sans stockage thermique, sans doute moins utile du fait que l'on devrait disposer des puissances suffisantes en hiver, grâce à la pompe à chaleur secondaire, et en été, par la spécialisation de la pompe à chaleur principale. On peut espérer des performances vraiment équivalentes, voire supérieures par grand froid, à celles d'un bon véhicule thermique.

La seconde alternative de contrôle des températures des deux échangeurs sur l'air d'habitacle H1 et H2, mentionnée dans la description du mode de réalisation selon la figure 1, est également présentée. Deux électrovannes EV1 et EV9, de commutation entre du fluide issu de la boucle de rejet RE ou du fluide issu de la boucle de distribution DI, alimentent respectivement H1 et H2. En outre l'option d'une électrovanne proportionnelle de recirculation EV3 sur la boucle de distribution, décrite plus haut, est retenue. En conditions tempérées, EV1 et EV9 sont positionnées de telle sorte que H1 soit alimenté en fluide froid - toujours supérieur à 0 °C du fait de la spécialisation de la pompe à chaleur PAC, donc sans risque de givrage de H1 -, et H2 en fluide chaud. C'est la configuration standard du groupe de chauffage HVAC dans un véhicule conventionnel, parfaitement gérée par le dispositif d'origine de réglage ou d'asservissement de la température d'habitacle associé audit groupe de chauffage, au moyen du volet de mixage V. Comme déjà souligné, cette disposition permet de condenser une partie de la vapeur d'eau contenue dans l'air introduit dans l'habitacle et de contrôler ainsi efficacement l'hygrométrie de l'habitacle en évitant l'embuage des surfaces vitrées.

Supposons que par température un peu fraîche, la pompe à chaleur soit configurée en chauffage. EV1 alimente H1 avec du fluide froid prélevé sur la boucle de rejet RE, et EV9 alimente H2 avec du fluide chaud prélevé sur la boucle de distribution DI. La température extérieure ou l'ensoleillement augmentant, la pompe à chaleur PAC ne dispose plus des ressources nécessaires pour assurer le confort. Cette situation est analysée par le calculateur de bord qui commande l'inversion de la PAC en configuration réfrigération, et simultanément l'inversion des électrovannes EV1 et EV9. La logique de commande intègre une hystérésis, de façon à éviter les inversions alternées intempestives de la pompe à chaleur.

Par température extérieure extrême, soit très froide, soit très chaude, la configuration précédente n'a pas la puissance d'échange nécessaire pour répondre aux besoins de l'habitacle. Le calculateur de bord positionne alors EV1 et EV9 dans le même sens, de façon que H1 et H2, alimentés par la boucle de distribution DI, concourent au chauffage ou respectivement à la climatisation. Pour éviter que cette transition s'accompagne d'une bouffée de chaleur, respectivement de froid, dans l'habitacle, la vanne EV3 réduit le débit dans H1 et H2 proportionnellement à la demande dans le cas d'un système de conditionnement automatique, par exemple lue à travers la position du volet V, ou selon une stratégie déterminée, par exemple associée à la mesure de la température T1 de l'air diffusé dans l'habitacle, dans le cas d'un groupe à commande manuelle.

## Revendications

1. Véhicule automobile comprenant un moteur à bas rejets thermiques (ME) d'entrainement des roues motrices et un système de conditionnement en température de l'air de l'habitacle (CAB), ledit système de conditionnement comprenant une pompe à chaleur réversible (PAC) qui conditionne en température respectivement une boucle de distribution (DI) et une boucle de rejet (RE) parcourues par un fluide caloporteur, la boucle de distribution (DI) étant connectée à un échangeur (H2) avec l'air entrant dans l'habitacle (CAB) et la boucle de rejet (RE) étant connectée à un échangeur (F1) avec l'air extérieur, ladite boucle de rejet étant en outre connectée au moteur (ME) de sorte à échanger thermiquement avec ledit moteur, ledit véhicule étant **caractérisé en ce que** la boucle de distribution (D1) est connectable par une électrovanne (EV1) à un autre échangeur (H1) avec l'air entrant dans l'habitacle (CAB).

2. Véhicule automobile selon la revendication 1, **caractérisé en ce que** le moteur à bas rejets thermiques est un moteur électrique (ME).

3. Véhicule automobile selon la revendication 2, **caractérisé en ce que** la boucle de rejet (RE) échange thermiquement avec le boîtier électronique (DRIVE) du moteur électrique (ME).

4. Véhicule automobile selon l'une quelconque des revendications 1 à 3, **caractérisé en ce que** la boucle de rejet (RE) comprend une électrovanne (EV2) pour permettre de connecter en série ou en dérivation le moteur (ME) et l'échangeur (F1).

5. Véhicule automobile selon l'une quelconque des revendications 1 à 4, **caractérisé en ce que** la boucle de rejet (RE) est en outre connectable à l'échangeur (H1) par l'intermédiaire de l'électrovanne (EV1).

6. Véhicule automobile selon l'une quelconque des revendications 1 à 5, **caractérisé en ce qu'**une réserve (R) de fluide caloporteur est commune aux deux boucles (DI, RE).

7. Véhicule automobile selon l'une quelconque des revendications 1 à 6, **caractérisé en ce qu'**un volet de mixage (V) est prévu entre les échangeurs (H1, H2) avec l'air entrant dans l'habitacle (CAB).

8. Véhicule automobile selon l'une quelconque des revendications 1 à 7, **caractérisé en ce qu'**une électrovanne de recirculation (EV3) est prévue sur la boucle de distribution (DI) de sorte à réguler le débit de fluide dans les échangeurs (H1, H2).

9. Véhicule automobile selon l'une quelconque des revendications 1 à 8, **caractérisé en ce que** la boucle de rejet (RE) est connectable au second échangeur (H2) sur l'air introduit dans l'habitacle par l'intermédiaire de l'électrovanne (EV9)

10. Véhicule automobile selon l'une quelconque des revendications 2 à 9, **caractérisé en ce qu'**il comprend en outre une batterie d'alimentation du moteur électrique (ME), ladite batterie comprenant une boucle de fluide caloporteur qui est connectée à la boucle de distribution (DI) et à la boucle de rejet (RE).

11. Véhicule automobile selon la revendication 10, **caractérisé en ce que** ladite boucle de régulation thermique de la batterie dispose d'une pompe propre et d'une ou plusieurs vannes (EV6, EV7) assurant la régulation de la température de ladite boucle de régulation thermique de la batterie ou son isolation du reste du réseau hydraulique de gestion thermique du véhicule.

12. Véhicule automobile selon l'une quelconque des revendications 1 à 11, **caractérisé en ce qu'**il comprend un échangeur (E) sur l'air extrait de l'habitacle qui est connecté à la boucle de rejet (RE) en sortie de la pompe à chaleur (PAC).

13. Véhicule automobile selon la revendication 12, **caractérisé en ce que** l'échangeur (E) est intégré à une boucle de régulation secondaire animée par une pompe (P6) et contrôlée par une vanne thermostatique (C1).

14. Véhicule automobile selon l'une quelconque des revendications 1 à 13, **caractérisé en ce qu'**il comprend en outre une réserve inertielle d'énergie thermique (ST), la boucle de distribution (DI) étant connectée à ladite réserve de sorte à échanger thermiquement avec elle.

15. Véhicule automobile selon la revendication 14, **caractérisé en ce que** la réserve inertielle d'énergie thermique (ST) est intégrée à la boucle de distribution (DI) en amont des échangeurs (H1, H2) avec l'air entrant dans l'habitacle (CAB).

16. Véhicule automobile selon la revendication 14 ou 15, **caractérisé en ce que** la boucle de distribution (DI) comprend une électrovanne (EV4) qui permet d'isoler la réserve inertielle (ST) de ladite boucle de distribution.

17. Véhicule automobile selon l'une quelconque des revendications 14 à 16, **caractérisé en ce que** la réserve inertielle d'énergie thermique (ST) comprend une quantité d'un matériau à changement de phase dans une plage de température déterminée.

18. Véhicule automobile selon l'une quelconque des revendications 1 à 17, **caractérisé en ce qu'**il comprend en outre un moteur thermique (MC) et une boucle de refroidissement dudit moteur qui est connectée avec un échangeur (F2) avec l'air extérieur, ladite boucle étant connectée à la boucle de distribution (DI).

19. Véhicule automobile selon la revendication 18, **caractérisé en ce qu'**une réserve (R) de fluide caloporteur est commune aux deux boucles (DI, RE) et à la boucle de refroidissement du moteur thermique (MC).

20. Véhicule automobile selon l'une quelconque des revendications 1 à 19, **caractérisé en ce qu'**il comprend en outre une deuxième pompe à chaleur (PAC2) dont la boucle de rejet (RE2) dessert l'échangeur (F1), la boucle de distribution de ladite deuxième pompe à chaleur étant connectable à la boucle de rejet (RE), par l'intermédiaire d'une électrovanne (EV8).

## Claims

1. Motor vehicle comprising a low-heat exhaust engine (ME) for driving the driving wheels and a temperature conditioning system of the air of the passenger compartment (CAB), said conditioning system comprising a reversible heat pump (PAC) which conditions in temperature respectively a distribution loop (DI) and an exhaust loop (RE) through which flows a coolant, the distribution loop (DI) being connected to an exchanger (H2) with the air entering into the passenger compartment (CAB) and the exhaust loop (RE) being connected to an exchanger (F1) with the outside air, said exhaust loop being furthermore connected to the engine (ME) in such a way as to allow for the exchanging of heat with said engine, said vehicle being **characterised in that** the distribution loop can be connected by a solenoid valve (EV1) to another exchanger (H1) with the air entering into the passenger compartment (CAB).

2. Motor vehicle set forth in claim 1, **characterised in that** the low-heat exhaust engine is an electric engine (ME).

3. Motor vehicle set forth in claim 2, **characterised in that** the exhaust loop (RE) exchanges heat with the electronic housing (DRIVE) of the electric engine (ME).

4. Motor vehicle as set forth in any of claims 1 to 3, **characterised in that** the exhaust loop (RE) comprises a solenoid valve (EV2) in order to allow for the connection or shunting of the engine (ME) and the exchanger (F1).

5. Motor vehicle as set forth in any of claims 1 to 4, **characterised in that** the exhaust loop (RE) can furthermore be connected to the exchanger (H1) via the intermediary of the solenoid valve (EV1).

6. Motor vehicle as set forth in any of claims 1 to 5, **characterised in that** a reserve (R) of coolant is common to the two loops (DI, RE).

7. Motor vehicle as set forth in any of claims 1 to 6, **characterised in that** a mixing flap (V) is provided between the exchangers (H1, H2) with the air entering into the passenger compartment (CAB).

8. Motor vehicle as set forth in any of claims 1 to 7, **characterised in that** a recirculation solenoid valve (EV3) is provided on the distribution loop (DI) in such a way as to regulate the flow of fluid in the exchangers (H1, H2).

9. Motor vehicle as set forth in any of claims 1 to 8, **characterised in that** the exhaust loop (RE) can be connected to the second exchanger (H2) on the air introduced into the passenger compartment by the intermediary of the solenoid valve (EV9)

10. Motor vehicle as set forth in any of claims 2 to 9, **characterised in that** it further comprises a power battery of the electric engine (ME), said battery comprising a coolant loop which is connected to the distribution loop (DI) and to the exhaust loop (RE).

11. Motor vehicle set forth in claim 10, **characterised in that** said heat regulation loop of the battery has a clean pump and one or several solenoid valves (EV6, EV7) providing the temperature regulation of said heat regulation loop of the battery or its isolation from the rest of the hydraulic network for the heat management of the vehicle.

12. Motor vehicle as set forth in any of claims 1 to 11, **characterised in that** it comprises an exchanger (E) on the air extracted from the passenger compartment which is connected to the exhaust loop (RE) at the outlet of the heat pump (PAC).

13. Motor vehicle set forth in claim 12, **characterised in that** the exchanger (E) is incorporated into a secondary regulation loop driven by a pump (P6) and controlled by a thermostatic valve (C1).

14. Motor vehicle as set forth in any of claims 1 to 13, **characterised in that** it further comprises a thermal energy inertial reserve (ST), the distribution loop (DI) being connected to said reserve in such a way as to exchange heat with it.

15. Motor vehicle set forth in claim 14, **characterised in that** the thermal energy inertial reserve (ST) is incorporated into the distribution loop (DI) upstream of the exchangers (H1, H2) with the air entering into the passenger comportment (CAB).

16. Motor vehicle set forth in claim 14 or 15, **characterised in that** the distribution loop (DI) comprises a solenoid valve (EV4) which makes it possible to isolate the inertial reserve (ST) from said distribution loop.

17. Motor vehicle as set forth in any of claims 14 to 16, **characterised in that** the thermal energy inertial reserve (ST) comprises a quantity of phase change substances in a determined temperature range.

18. Motor vehicle as set forth in any of claims 1 to 17, **characterised in that** it further comprises a heat engine (MC) and a cooling loop of said engine which is connected with an exchanger (F2) with the outside air, said loop being connected to the distribution loop (DI).

19. Motor vehicle set forth in claim 18, **characterised in that** a reserve (R) of coolant is common to the two loops (DI, BE) and to the cooling loop of the heat engine (MC).

20. Motor vehicle as set forth in any of claims 1 to 19, **characterised in that** it further comprises a second heat pump (PAC2) of which the exhaust loop (RE2) supplies the exchanger (F1), the distribution loop of said second heat pump able to be connected to the exhaust loop (RE), by the intermediary of a solenoid valve (EV8).

## Patentansprüche

1. Kraftfahrzeug, umfassend einen Motor (ME) mit geringer Antriebsabwärme der Antriebsräder und ein System zur Temperaturkonditionierung der Luft der Fahrgastzelle (CAB), wobei das Konditioniemngssystem eine umkehrbare Wärmepumpe (PAC) umfasst, die jeweils einen Verteilerkreislauf (DI) und einen Ausstoßkreislauf (RE) temperaturmäßig konditioniert, durch die ein Wärmeübertragungsfluid fließt, wobei der Verteilerkreislauf (DI) mit der Luft, die in die Fahrgastzelle (CAB) eindringt, an einen Austauscher (H2) angeschlossen ist und der Ausstoßkreislauf (RE) mit der Außenluft an einen Austauscher (F1) angeschlossen ist, wobei der Ausstoßkreislauf (RE) ferner an den Motor (ME) angeschlossen ist, um mit dem Motor einen Wärmeaustausch auszuführen, wobei das Fahrzeug **dadurch gekennzeichnet ist, dass** der Verteilerkreislauf (DI) über ein Magnetventil (EV1) mit der Luft, die in die Fahrgastzelle (CAB) eindringt, an einen anderen Austauscher (H1) anschließbar ist.

2. Kraftfahrzeug nach Anspruch 1, **dadurch gekennzeichnet, dass** der Motor mit geringer Abwärme ein Elektromotor (ME) ist.

3. Kraftfahrzeug nach Anspruch 2, **dadurch gekennzeichnet, dass** der Ausstoßkreislauf (ME) mit dem elektronischen Schaltkasten (DRIVE) des Elektromotors (ME) einen Wärmeaustausch ausführt.

4. Kraftfahrzeug nach einem der Ansprüche 1 bis 3, **dadurch gekennzeichnet, dass** der Ausstoßkreislauf (RE) ein Magnetventil (EV12) umfasst, um den Motor (ME) und den Austauscher (F1) in Reihe oder parallel schalten zu können.

5. Kraftfahrzeug nach einem der Ansprüche 1 bis 4, **dadurch gekennzeichnet, dass** der Ausstoßkreislauf (RE) ferner mit dem Austauscher (H1) über das Magnetventil (EV1) anschließbar ist.

6. Kraftfahrzeug nach einem der Ansprüche 1 bis 5, **dadurch gekennzeichnet, dass** eine Reserve (R) an Wärmeübertragungsfluid den beiden Kreisläufen (DI, RE) gemeinsam ist.

7. Kraftfahrzeug nach einem der Ansprüche 1 bis 6, **dadurch gekennzeichnet, dass** eine Mischklappe (V) zwischen den Austauschern (H1, H2) mit der Luft, die in die Fahrgastzelle (CAB) eindringt, vorgesehen ist.

8. Kraftfahrzeug nach einem der Ansprüche 1 bis 7, **dadurch gekennzeichnet, dass** ein Umwätzmagnetventil (EV3) auf dem Verteilerkreislauf (DI) bereitgestellt wird, um den Fluiddurchfluss in den Austauschern (H1, H2) zu regulieren.

9. Kraftfahrzeug nach einem der Ansprüche 1 bis 8, **dadurch gekennzeichnet, dass** der Ausstoßkreislauf (RE) an den zweiten Austauscher (H2) an der Luft, die über das Magnetventil (EV9) in die Fahrgastzelle eingeführt wird, anschließbar ist.

10. Kraftfahrzeug nach einem der Ansprüche 2 bis 9, **dadurch gekennzeichnet, dass** es ferner eine Batterie zur Versorgung des Elektromotors (ME) umfasst, wobei die Batterie einen Kreislauf mit Wärmeübertragungsfluid umfasst, der an den Verteilerkreislauf (DI) und an den Ausstoßkreislauf (RE) angeschlossen ist.

11. Kraftfahrzeug nach Anspruch 10, **dadurch gekennzeichet, dass** der Wärmeregulierungskreislauf der Batterie über seine eigene Pumpe und ein oder mehrere Ventile (EV6, EV7) verfügt, welche die Regulierung der Temperatur des Wärmereguliezungslareislaufs der Batterie oder seine Trennung vom Rest des Hydrauliknetzes für die wärmetechnische Steuerung des Fahrzeugs sicherstellen.

12. Kraftfahrzeug nach einem der Ansprüche 1 bis 11, **dadurch gekennzeichnet, dass** es einen Austauscher (E) an der Luft, die der Fahrgastzelle entzogen wird, umfasst, der an den Ausstoßkreislauf (RE) am Ausgang der Wärmepumpe (PAC) angeschlossen ist.

13. Kraftfahrzeug nach Anspruch 12, **dadurch gekennzeichnet, dass** der Austauscher (E) in einen Nebenregulierungskreislauf integriert ist, der von einer Pumpe (P6) angetrieben wird und von einem thermostatischen Ventil (C1) gesteuert wird.

14. Kraftfahrzeug nach einem der Ansprüche 1 bis 13, **dadurch gekennzeichnet, dass** es feiner eine Inertialreserve an Wärmeenergie (ST) umfasst, wobei der Verteilerkreislauf (DI) an die Reserve angeschlossen ist, um mit dieser einen Wärmeaustausch auszuführen.

15. Kraftfahrzeug nach Anspruch 14, **dadurch gekennzeichnet, dass** die Inertialreserve an Wärmeenergie (ST) in den Verteilerkreistauf (DI) oberhalb der Austauscher (H1, H2) mit der Luft, die in die Fahrgastzelle (CAB) eindringt, integriert ist.

16. Kraftfahrzeug nach Anspruch 14 oder 15, **dadurch gekennzeichnet, dass** der Verteilerkreislauf (DI) ein Magnetventil (EV4) umfasst, das es ermöglicht, die Inertialreserve (ST) des Verteilerkreislaufs abzutrennen.

17. Kraftfahrzeug nach einem der Ansprüche 14 bis 16, **dadurch gekennzeichnet, dass** die Inertialreserve an Wärmeenergie (ST) eine Menge eines Materials mit einer Phasenänderung in einem vorherbestimmten Temperaturbereich umfasst.

18. Kraftfahrzeug nach einem der Ansprüche 1 bis 17, **dadurch gekennzeichnet, dass** es ferner einen Verbrennungsmotor (MC) und einen Kühlkreislauf des Motors umfasst, der an einen Austauscher (F2) mit der Außenluft angeschlossen ist, wobei der Kreislauf an den Verteilerkreislauf (DI) angeschlossen ist.

19. Kraftfahrzeug nach Anspruch 18, **dadurch gekennzeichnet, dass** eine Reserve (R) an Wärmeübertragungsfluid den beiden Kreisläufen (DI, RE) und dem Kühlkreislauf des Verbrennungsmotors (MC) gemeinsam ist.

20. Kraftfahrzeug nach einem der Ansprüche 1 bis 19, **dadurch gekennzeichnet, dass** es ferner eine zweite Wärmepumpe (PAC2) umfasst, deren Ausstoßkreislanf (RE2) den Austauscher (F1) versorgt, wobei der Verteilerkreislauf der zweiten Wärmepumpe über ein Magnetventil (EV8) an den Ausstoßkreislauf (RE) anschließbar ist.
